# EUROPÄISCHE PATENTSCHRIFT

(11) **EP 3 180 653 B1**
(45) Veröffentlichungstag und Bekanntmachung des Hinweises auf die Patenterteilung: **12.09.2018**
(21) Anmeldenummer: 15753889.3
(22) Anmeldetag: 28.07.2015
(51) Int. Cl.: G02C 5/22, G02C 13/00

(54) **FEDERSCHARNIER ZWISCHEN EINEM BÜGELBACKEN UND EINEM BÜGEL EINER BRILLE**
SPECTACLES ELASTIC HINGE BETWEEN LUG AND TEMPLE
CHARNIÈRE ELASTIQUE DE LUNETTES SITUÉE ENTRE UNE BRANCHE ET LA FIXATION FRONTALE

(30) Priorität: 13.08.2014 AT 505702014
(43) Veröffentlichungstag der Anmeldung: 21.06.2017
(73) Patentinhaber: Redtenbacher Präzisionsteile Ges. M.B.H., 4644 Scharnstein (AT)
(72) Erfinder: BUCHEGGER, Harald, A-4817 St. Konrad (AT)
(74) Vertreter: Patentanwaltskanzlei Hübscher
(86) Internationale Anmeldenummer: PCT/AT2015/050183
(87) Internationale Veröffentlichungsnummer: WO 2016/023053

(56) Entgegenhaltungen:
- EP-A2- 0 421 954
- WO-A1-2012/035382
- CN-U- 202 886 752
- FR-A1- 2 275 791
- US-A- 5 936 699

## Beschreibung

### Technisches Gebiet

Die Erfindung bezieht sich auf ein Federscharnier zwischen einem Bügelbacken und einem Bügel einer Brille mit zwei je einem dieser Brillenteile zugehörigen Scharnierteilen, von denen einer eine Lagergabel mit einer Scharnierachse zur Aufnahme des anderen Scharnierteils formt, der mit Hilfe eines Gleitstücks in einem mit dem Bügel verschraubten Gehäuse verschiebbar geführt ist, und mit einer zwischen zwei Schenkeln des Gleitstücks angeordneten Schraubenfeder, die sich einerseits an einem die beiden Schenkel verbindenden Steg des Gleitstücks und anderseits an einem gehäusefesten Widerlager abstützt.

### Stand der Technik

Um bei einer verdeckten Federscharnieranordnung den Konstruktionsaufwand für die stirnseitige Montage des federbeaufschlagten Scharnierteils zu vereinfachen, ist es bekannt (EP 2 189 836 A1), das eine Führung für das federbeaufschlagte Gleitstück bildende Gehäuse als Verschlusskörper einer das Gleitstück mit der Schraubenfeder aufnehmenden Bügelausnehmung auszubilden. Da das Widerlager für die Schraubenfeder durch diesen Verschlusskörper gebildet wird, bedarf es keines nachträglichen Einsetzens eines Widerlagers. Dies bedeutet allerdings, dass die Schraubenfeder nicht in axialer Richtung in das Gehäuse eingeführt werden kann. Dies ist auch nicht notwendig, weil bei einem Gleitstück, das die Schraubenfeder zwischen zwei Schenkeln aufnimmt und mit dem die beiden Schenkel miteinander verbindenden Steg eine Abstützung für die Schraubenfeder bildet, die Schraubenfeder vor dem Befestigen des Gehäuses am Bügel zwischen die Schenkel des im Gehäuse geführten Gleitstücks eingesetzt werden kann, wobei sich die Schraubenfeder einerseits am Steg des Gleitstücks und anderseits am Verschlusskörper abstützt. Der Verschlusskörper mit dem durch die Schraubenfeder beaufschlagten Gleitstück kann daher über einen seitlich vorstehenden Anschlussflansch stirnseitig am Brillenbügel befestigt werden. Die Für diese Konstruktion zwingende Gehäusebefestigung über einen seitlich vorstehenden Anschlussflansch bedingt allerdings vergleichsweise breite Brillenbügel, um das als Verschlusskörper für die das Gleitstück aufnehmende Bügelausnehmung dienende Gehäuse seitlich neben der Bügelausnehmung auf der Stirnseite des Bügels anschrauben zu können.

### Darstellung der Erfindung

Der Erfindung liegt somit die Aufgabe zugrunde, ein verdecktes Federscharnier für Brillen zu schaffen, das auch bei vergleichsweise schmalen Brillenbügeln eingesetzt werden kann.

Ausgehend von einem Federscharnier der eingangs geschilderten Art löst die Erfindung die gestellte Aufgabe dadurch, dass das mit einer Öffnung zum Einsetzen der Schraubenfeder quer zur Schraubenfederachse versehene Gehäuse einen dem Steg des Gleitstücks gegenüberliegenden Boden mit einer zur Schraubenfeder koaxialen Durchtrittsöffnung für eine mit ihrem Kopf auf der Innenseite des Gehäusebodens abgestützten, in den Bügel eingreifenden Befestigungsschraube und das Gleitstück eine zur Schraubenfeder koaxiale Durchgangsöffnung für ein Werkzeug zur Betätigung der Befestigungsschraube aufweisen.

Durch die Maßnahme, das Gehäuse über seinen dem Steg des Gleitstücks gegenüberliegenden Boden in der das Gehäuse aufnehmenden Bügelausnehmung festzuschrauben, entfällt die Notwendigkeit, einen seitlich über die Bügelausnehmung vorstehenden Anschlussflansch vorzusehen, sodass der Brillenbügel entsprechend schmäler ausgebildet werden kann, ohne die Befestigung des Federscharniers zu gefährden. Die Befestigungsschraube verläuft koaxial zur Schraubenfeder und kann daher nach dem Einsetzen des Gehäuses in die Bügelausnehmung durch die Schraubenfeder mit Hilfe eines Betätigungswerkzeuges in den Brillenbügel eingeschraubt werden, wenn das Gleitstück eine zur Schraubenfeder koaxiale Durchgangsöffnung für ein solches Werkzeug aufweist. Zum Montieren des Federscharniers ist daher zunächst die Befestigungsschraube in die Durchtrittsöffnung des Gehäusebodens einzuführen, bevor das Gleitstück in die durch das Gehäuse gebildete Führung eingesetzt wird. Das Gehäuse bedarf einer seitlichen Öffnung zum Einsetzen der Schraubenfeder quer zu ihrer Achse zwischen die Schenkel des Gleitstücks, das durch die sich einerseits am Gehäuse und anderseits am Steg zwischen den Schenkeln des Gleitstücks abstützende Schraubenfeder in das Gehäuse gezogen wird. Die in dieser Weise vormontierte Montageeinheit kann dann in die stirnseitige Bügelausnehmung eingesetzt und mit Hilfe eines Werkzeugs befestigt werden, das durch die Durchgangsöffnung des Gleitstücks den Kopf der Befestigungsschraube erfasst und die Befestigungsschraube in den Bügel einschraubt.

Da die Schraubenfeder quer zu ihrer Achse zwischen die Schenkel des Gleitstücks eingesetzt werden muss, ergeben sich besonders vorteilhafte Konstruktionsbedingungen, wenn das Gehäuse einen Rahmen mit zwei das Gleitstück zwischen sich aufnehmenden Schenkeln und dem die beiden Schenkel miteinander verbindenden Boden bildet. Mit einer solchen Gehäuseausbildung wird nicht nur der Zugang zum Gleitstück für das Einsetzen der Schraubenfeder von beiden Gehäuseseiten her in einfacher Weise sichergestellt, sondern auch die Gehäuseabmessung klein gehalten, weil die Gehäusehöhe senkrecht zur Rahmenebene in diesem Fall lediglich durch den Durchmesser der Schraubenfeder bestimmt wird.

Die Montage der aus dem Gehäuse, seiner Befestigungsschraube, dem Gleitstück und der Schraubenfeder vormontierten Montageeinheit kann erleichtert werden, wenn ein die Schraubenfeder durchsetzender Kupplungsstift vorgesehen ist, der an seinem dem Gehäuseboden zugekehrten Ende einen Mitnehmeransatz für den Kopf der Befestigungsschraube und am gegenüberliegenden Ende einen Aufnahme für ein Betätigungswerkzeug aufweist, sodass das Betätigungswerkzeug nicht durch die gesamte Durchgangsöffnung des Gleitstücks eingeführt zu werden braucht, um den Kopf der Befestigungsschraube zu erreichen.

### Kurze Beschreibung der Zeichnungen

In der Zeichnung ist der Erfindungsgegenstand beispielsweise dargestellt. Es zeigen
- Fig. 1: ein erfindungsgemäßes Federscharnier für eine Brille in einem vereinfachten Längsschnitt senkrecht zur Scharnierachse,
- Fig. 2: einen Schnitt nach der Linie II-II der Fig. 1 in einem kleineren Maßstab,
- Fig. 3: eine der Fig. 2 entsprechende Darstellung einer Konstruktionsvariante mit einem die Schraubenfeder durchsetzenden Kupplungsstift zur Betätigung der Befestigungsschraube und
- Fig. 4: eine vormontierte Montageeinheit aus Gehäuse, Gleitstück, Schraubenfeder und Befestigungsschraube in einem Schaubild.

### Weg zur Ausführung der Erfindung

Ein erfindungsgemäßes Federscharnier zwischen einem Bügelbacken 1 und einem Bügel 2 weist zwei Scharnierteile 3, 4 auf, die mit Hilfe einer Scharnierachse 5 gelenkig miteinander verbunden sind. Der mit dem Bügelbacken 1 verbundene Scharnierteil 4 bildet eine Lagergabel 6, in die der Scharnierteil 3 eingreift, der an einem in einem Gehäuse 7 verschiebbar geführten Gleitstück 8 angeordnet ist. Das Gleitstück 8 weist zwei Schenkel 9 auf, die miteinander durch einen Steg 10 auf der der Lagerbohrung 11 für die Scharnierachse 5 abgewandten Seite verbunden sind. Zwischen diesen beiden Schenkeln 9 ist eine Schraubenfeder 12 angeordnet, die sich auf der der Lagerbohrung 11 abgewandten Seite am Steg 10 und mit ihrem gegenüberliegenden Ende an einer Schulter 13 des Gehäuses 7 abstützt, sodass das Gleitstück 8 mit dem Scharnierteil 3 durch die Schraubenfeder 12 in das Gehäuse 7 gezogen wird.

Das Gehäuse 7 bildet einen Rahmen mit zwei Schenkeln 14, die die Schenkel 9 des Gleitstücks 8 zwischen sich aufnehmen und miteinander durch einen Boden 15 des Gehäuses 7 verbunden sind. Im Boden 15 ist eine zur Schraubenfeder 12 koaxiale Durchtrittsöffnung 16 für eine Befestigungsschraube 17 vorgesehen, die sich mit ihrem Kopf 18 auf der Innenseite des Bodens 15 abstützt und in den Bügel 2 eingeschraubt wird. Zu diesem Zweck ist das Gleitstück mit einer zur Schraubenfeder 12 koaxialen Durchgangsöffnung 19 versehen, durch die ein Werkzeug zur Betätigung der Befestigungsschraube 17 durch die Schraubenfeder 12 hindurch eingeführt werden kann.

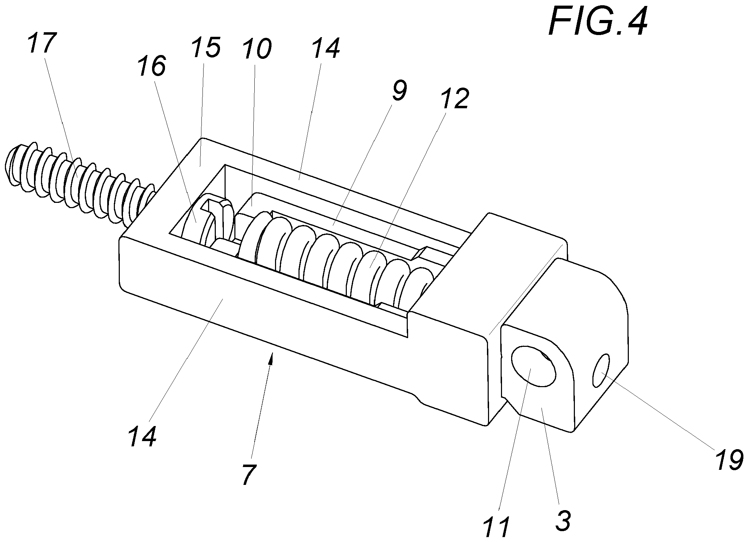

Zur Montage des Federscharniers wird zunächst in die Durchtrittsöffnung 16 des Bodens 15 des Gehäuses 7 die Befestigungsschraube 17 eingeführt, bevor das Gleitstück 8 in das eine Verschiebeführung für das Gleitstück 8 bildende Gehäuse 7 eingesetzt wird. Die beiden Schenkel 9 des Gleitstücks 8 bleiben aufgrund der rahmenartigen Ausbildung des Gehäuses 7 für das Einsetzen der Schraubenfeder 12 quer zu ihrer Achse zugänglich, sodass sich nach dem Einsetzen der Schraubenfeder 12, die sich einerseits am Steg 10 des Gleitstücks 8 und anderseits an der Schulter 13 des Gehäuses 7 unter einer Vorspannung abstützt, eine aus der Fig. 4 ersichtliche vormontierte Montageeinheit ergibt, die in eine vorbereitete, stirnseitige Bügelausnehmung 20 eingesetzt und mit Hilfe eines entsprechenden Betätigungswerkzeugs für die Befestigungsschraube 17 im Bügel 2 festgeschraubt werden kann. Es braucht somit lediglich der über das Gehäuse 7 vorstehende Scharnierteil 3 in die Lagergabel 6 des am Bügelbacken 1 vorgesehenen Scharnierteils 4 eingesetzt zu werden, bevor die beiden Scharnierteile 3 und 4 mit Hilfe der Scharnierachse 5 gelenkig verbunden werden.

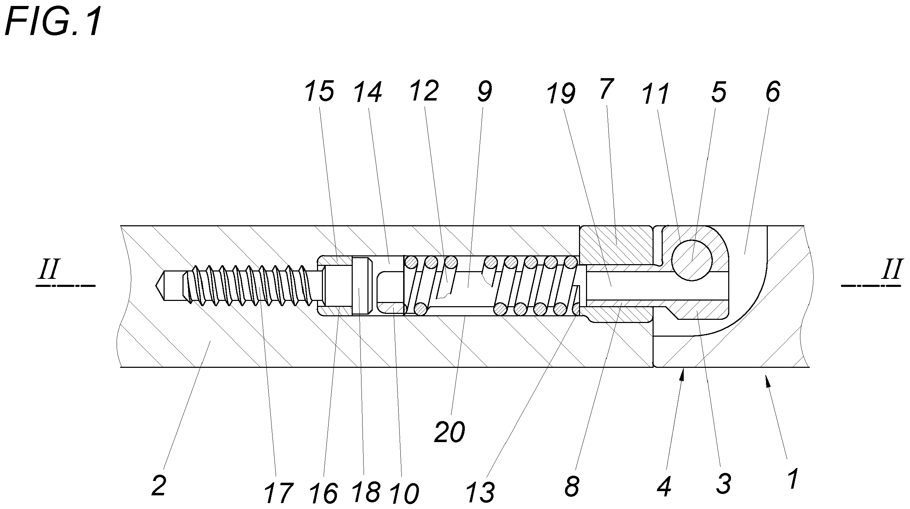

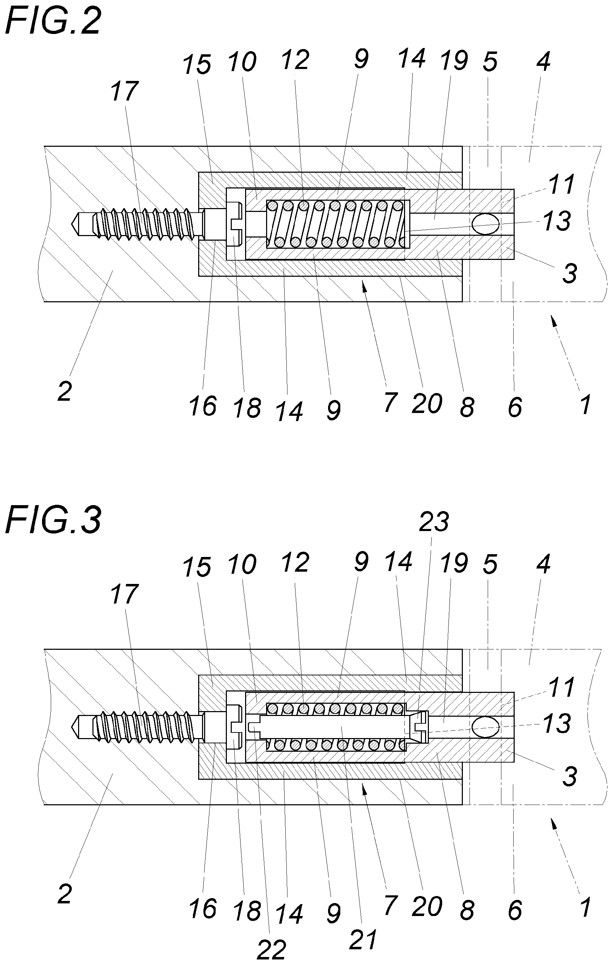

Die Ausführungsform nach der Fig. 3 unterscheidet sich von der nach den Fig. 1 und 2 lediglich dadurch, dass in die Schraubenfeder 12 ein Kupplungsstift 21 eingesetzt ist, der an seinem dem Gehäuseboden 15 zugekehrten Ende einen Mitnehmeransatz 22 für den Kopf 18 der Befestigungsschraube 17 und am gegenüberliegenden Ende eine Aufnahme 23 für ein Betätigungswerkzeug aufweist. Mit Hilfe dieses einen Teil der Montageeinheit bildenden Kupplungsstifts 21 wird die Betätigung der Befestigungsschraube 17 erleichtert, weil das Betätigungswerkzeug nicht durch das gesamte Gleitstück 8 und die Schraubenfeder 12 eingeführt zu werden braucht.

## Patentansprüche

1. Federscharnier zwischen einem Bügelbacken (1) und einem Bügel (2) einer Brille mit zwei je einem dieser Brillenteile zugehörigen Scharnierteilen (3,4), von denen einer eine Lagergabel (6) mit einer Scharnierachse (5) zur Aufnahme des anderen Scharnierteils (4, 3) formt, der mit Hilfe eines Gleitstücks (8) in einem mit dem Bügel (2) verschraubten Gehäuse (7) verschiebbar geführt ist, und mit einer zwischen zwei Schenkeln (9) des Gleitstücks (8) angeordneten Schraubenfeder (12), die sich einerseits an einem die beiden Schenkel (9) verbindenden Steg (10) des Gleitstücks (8) und anderseits an einem gehäusefesten Widerlager abstützt, **dadurch gekennzeichnet, dass** das mit einer Öffnung zum Einsetzen der Schraubenfeder (12) quer zur Schraubenfederachse versehene Gehäuse (7) einen dem Steg (10) des Gleitstücks (8) gegenüberliegenden Boden (15) mit einer zur Schraubenfeder (12) koaxialen Durchtrittsöffnung (16) für eine mit ihrem Kopf (18) auf der Innenseite des Gehäusebodens (15) abgestützten, in den Bügel (2) eingreifenden Befestigungsschraube (17) und das Gleitstück (8) eine zur Schraubenfeder (12) koaxiale Durchgangsöffnung (19) für ein Werkzeug zur Betätigung der Befestigungsschraube (17) aufweisen.

2. Federscharnier nach Anspruch 1, **dadurch gekennzeichnet, dass** das Gehäuse (7) einen Rahmen mit zwei das Gleitstück (8) zwischen sich aufnehmenden Schenkeln (14) und dem die beiden Schenkel (14) miteinander verbindenden Boden (15) bildet.

3. Federscharnier nach Anspruch 1 oder 2, **dadurch gekennzeichnet, dass** ein die Schraubenfeder (12) durchsetzender Kupplungsstift (21) vorgesehen ist, der an seinem dem Gehäuseboden (15) zugekehrten Ende einen Mitnehmeransatz (22) für den Kopf (18) der Befestigungsschraube (17) und am gegenüberliegenden Ende eine Aufnahme (23) für ein Betätigungswerkzeug aufweist.

## Claims

1. Spring hinge between an end piece (1) and a temple (2) of a pair of spectacles comprising two hinge parts (3, 4) which are each associated with one of these parts of the pair of spectacles and of which one forms a supporting fork (6) having a hinge axis (5) for accommodating the other hinge part (4, 3) which is displaceably guided with the aid of a sliding piece (8) in a housing (7) screwed to the temple (2), and comprising a helical spring (12) which is arranged between two limbs (9) of the sliding piece (8) and is supported at one end on a web (10) of the sliding piece (8) connecting the two limbs (9) and is supported at the other end on an abutment fixed to the housing, **characterised in that** the housing (7) which is provided with an opening for inserting the helical spring (12) transversely with respect to the helical spring axis has a base (15) opposite the web (10) of the sliding piece (8) and having a through-opening (16), coaxial to the helical spring (12), for a fastening screw (17) which is supported with its head (18) on the inner side of the housing base (15) and engages into the temple (2), and the sliding piece (8) has a passage opening (19), coaxial to the helical spring (12), for a tool for actuating the fastening screw (17).

2. Spring hinge as claimed in claim 1, **characterised in that** the housing (7) forms a frame having two limbs (14), which accommodate the sliding piece (8) therebetween, and the base (15) which connects the two limbs (14) to one another.

3. Spring hinge as claimed in claim 1 or 2, **characterised in that** a coupling pin (21) is provided which passes through the helical spring (12) and has, at its end facing the housing base (15), an engaging lug (22) for the head (18) of the fastening screw (17) and has, at the opposite end, a receptacle (23) for an actuating tool.

## Revendications

1. Charnière à ressort, entre un tenon (1) et une branche (2) de paire de lunettes avec deux parties de charnière (3, 4) associées chacune à une de ces pièces de lunette, dont une forme une fourche de palier (6) avec un axe de charnière (5) pour la réception de l'autre partie de charnière (4, 3) qui est guidée de manière coulissante, à l'aide d'une pièce coulissante (8), dans un boîtier (7) vissé avec la branche (2), et avec un ressort cylindrique (12) disposé entre deux bras (9) de la pièce coulissante (8) qui s'appuie d'une part, contre un élément de liaison (10) reliant les deux bras (9) de la pièce coulissante (8) et d'autre part, contre une butée fixée sur le boîtier, **caractérisée en ce que** le boîtier (7), équipé d'une ouverture pour mettre en place le ressort cylindrique (12) transversalement à l'axe du ressort cylindrique, comporte un corps (15) situé en regard de l'élément de liaison (10) de la pièce coulissante (8) et pourvu d'une ouverture débouchante (16) coaxiale au ressort cylindrique (12) pour une vis de fixation (17) s'appuyant par sa tête (18) sur la face interne du fond du boîtier (15) et en prise dans la branche (2), et la pièce coulissante (8) comporte une ouverture débouchante (19) coaxiale au ressort cylindrique (12) pour un outil servant à actionner la vis de fixation (17).

2. Charnière à ressort selon la revendication 1, **caractérisée en ce que** le boitier (7) forme un cadre avec deux bras (14) logeant la pièce coulissante (8) entre eux, et le corps (15) reliant ensemble les deux bras (14).

3. Charnière à ressort selon la revendication 1 ou 2, **caractérisée en ce qu'**il est prévu une tige d'accouplement (21) traversant le ressort cylindrique (12) qui comporte au niveau de son extrémité tournée vers le corps de boitier (15) un élément d'entrainement (22) pour la tête (18) de la vis de fixation (17) et au niveau de l'extrémité opposée, un logement (23) pour un outil d'actionnement.
